# FASCICULE DE BREVET EUROPEEN

(11) **EP 1 710 456 B1**
(45) Date de publication et mention de la délivrance du brevet: **12.03.2008**
(21) Numéro de dépôt: 06354012.4
(22) Date de dépôt: 27.03.2006
(51) Int. Cl.: F16B 45/02

(54) **Mousqueton à verrouillage automatique**
Selbstverriegelnder Karabinerhaken
Self-latching snap hook

(30) Priorité: 05.04.2005 FR 0503367
(43) Date de publication de la demande: 11.10.2006
(73) Titulaire: ZEDEL, 38920 Crolles (FR)
(72) Inventeur: Petzl, Paul, 38530 Barraux (FR); Broquerie, Christian, 38600 Fontaine (FR)
(74) Mandataire: Hecké, Gérard

(56) Documents cités:
- DE-A1- 4 237 263
- FR-A- 1 291 420
- GB-A- 2 077 838

## Description

### Domaine technique de l'invention

L'invention est relative à un mousqueton comprenant
- un corps fixe en forme de C ayant une première extrémité dotée d'un élément de retenue,
- un doigt mobile autour d'un axe entre une position de fermeture et une position d'ouverture, ledit axe étant situé au voisinage de la deuxième extrémité du corps,
- un premier ressort de rappel sollicitant le doigt vers la position de fermeture par engagement de l'élément de retenue dans un élément d'accrochage du doigt,
- un dispositif de blocage comprenant une pièce de verrouillage mobile sollicitée par des moyens élastiques vers une position verrouillée pour le verrouillage automatique du doigt en position de fermeture, ladite pièce de verrouillage étant montée à pivotement limité au voisinage de l'élément d'accrochage, en étant associée à une bague d'actionnement utilisée uniquement à l'ouverture du mousqueton pour le pivotement du doigt vers la position déverrouillée,
- et des moyens agencés à la première extrémité du corps fixe pour déverrouiller automatiquement la pièce de verrouillage avant la venue du doigt en fin de course de fermeture.

### Etat de la technique

Les mousquetons connus à verrouillage sont généralement équipés de bagues à vis ou à baïonnette montées coaxialement sur le doigt mobile. Dans le cas des bagues à vis, le passage de la deuxième position déverrouillée vers la première position verrouillée impose un vissage de plusieurs tours de la bague pour la déplacer en translation le long du doigt pendant une course de quelques millimètres de manière à recouvrir efficacement l'élément de retenue du corps. Cette opération de vissage est fastidieuse et nécessite un temps de manoeuvre relativement long. Le même inconvénient subsiste lors du dévissage pour le passage de la bague de la première position verrouillée vers la deuxième position déverrouillée. Dans le cas d'une bague à baïonnette, le blocage du doigt en position fermée s'opère par un premier déplacement en translation de la bague vers le haut à l'encontre de la force d'un ressort, suivi d'un deuxième déplacement en rotation limitée. Après relâchement, la bague est soumise à un léger mouvement de recul, et est maintenue dans la première position de blocage par la force élastique du ressort. Un déverrouillage intempestif de la bague reste néanmoins possible en présence de forces de friction exercées par la corde.

Le document EP 826890 décrit un mousqueton à bague de verrouillage, laquelle est montée à rotation autour du doigt pivotant. Un verrou à bille est solidaire du doigt, et coopère avec la bague rotative pour assurer le verrouillage positif du mousqueton en position fermée lorsque la bague est actionnée en fin de course. Le déplacement manuel en rotation de la bague de la première position verrouillée vers la deuxième position déverrouillée ne peut intervenir qu'après neutralisation préalable du verrou. L'ouverture du doigt d'un mousqueton verrouillé nécessite donc une première commande de déclenchement du verrou, un deuxième mouvement de rotation de la bague vers la deuxième position déverrouillée, et un troisième mouvement de pivotement du doigt vers la position d'ouverture. Le deuxième mouvement de rotation pour le déverrouillage de la bague rallonge la séquence d'ouverture, et complique la manipulation du mousqueton.

Il existe également des mousquetons ayant une bague de verrouillage automatique du doigt lorsque ce dernier arrive en position de fermeture sous l'action d'un ressort de rappel. La bague peut être rotative ou coulissante, et reste en position déverrouillée aussi longtemps que le doigt est ouvert. Elle revient automatiquement en position verrouillée en fin de course de fermeture du doigt. Lors du déplacement de la bague entre la position déverrouillée et la position verrouillée, on a constaté que les forces de frottement de la bague pouvaient entraver la fermeture complète du doigt, au détriment de la sécurité.

Les documents DE 4237263 et GB 2077838 se rapportent à des mousquetons conformes au préambule de la revendication 1. Chaque mousqueton est équipé d'un verrou commandé et sollicité directement par un ressort pour bloquer le doigt en position fermée. Selon le document DE 4237263, le verrou est intégré à l'intérieur du doigt, et son déverrouillage pour l'ouverture du mousqueton nécessite un effort important.

### Objet de l'invention

L'objet de l'invention consiste à améliorer la sécurité et la manipulation d'un mousqueton à verrouillage automatique du doigt.

Le mousqueton selon l'invention est caractérisé en ce que la pièce de verrouillage est réalisée au moyen d'un fil d'acier plié en forme de U, et comportant aux extrémités deux demi-axes décalés pour constituer les moyens élastiques de rappel de la pièce de verrouillage dans le sens du verrouillage.

La pièce de verrouillage peut être solidaire du doigt ou de la bague d'actionnement, cette dernière étant inactive pour le verrouillage, mais active pour le déverrouillage du mousqueton.

L'axe de pivotement de la pièce de verrouillage s'étend perpendiculairement au doigt mobile, permettant un déblocage manuel rapide de la pièce de verrouillage sous l'action de la bague pour l'ouverture du doigt.

La bague d'actionnement est montée de préférence coaxialement à coulissement sur le doigt avec interposition d'un deuxième ressort de rappel sollicitant la pièce de verrouillage et la bague vers la position verrouillée du doigt.

### Description sommaire des dessins

D'autres avantages et caractéristiques de l'invention ressortiront plus clairement de la description qui va suivre, donnée uniquement à titre d'exemple non limitatif, et représentée aux dessins annexés dans lesquels:
- la figure 1 est une vue en perspective du mousqueton selon l'invention, le doigt étant solidaire du doigt, et se trouvant fermé et verrouillé par le dispositif de blocage formé par un fil en acier plié en U;
- la figure 2 montre une vue en élévation de la figure 1 ;
- la figure 3 est une vue de profil de la figure 1 ;
- la figure 4 est une vue en coupe selon la ligne 4-4 de la figure 3, le doigt étant fermé et verrouillé;
- la figure 5 est une vue identique de la figure 4 lorsque le doigt est fermé et le dispositif de blocage est en position déverrouillée suite à l'abaissement de la bague;
- la figure 6 est une vue en coupe partielle de la figure 5 montrant la venue en engagement de l'ergot de la bague contre la pièce de verrouillage pour la déverrouiller ;
- la figure 7 est une vue en coupe partielle de la figure 5 montrant le déblocage du doigt vers autoriser son ouverture ;
- les figures 8 et 9 sont des vues identiques à la figure 5 en position d'ouverture du doigt, respectivement avant et après le retour de la bague d'actionnement vers la position verrouillée ;
- la figure 10 représente une vue identique de la figure 9 lors du retour du doigt vers la position fermée, le dispositif de blocage étant automatiquement déverrouillé par une rampe du corps avant la fin de course de fermeture;
- la figure 11 montre une vue en perspective d'une variante de réalisation de la figure 1, dans laquelle la pièce de verrouillage est solidaire de la bague d'actionnement coulissante;
- la figure 12 est une vue en élévation de la figure 11;
- la figure 13 est une vue de profil de la figure 12;
- la figure 14 est une vue en coupe selon la ligne 14-14 de la figure 13, le doigt étant fermé et verrouillé ;
- la figure 15 est une vue identique de la figure 14, après coulissement manuel de la bague et du dispositif de blocage dans le sens de la flèche F1 pour le déverrouillage du doigt dans la position fermée;
- la figure 16 montre une vue identique de la figure 15 après ouverture du doigt, la bague se trouvant en position basse avec compression du deuxième ressort de rappel;
- la figure 17 est une vue identique de la figure 16, après ouverture complète du doigt, et suite au retour de la bague et du dispositif de blocage vers la position haute après détente du ressort de rappel ;
- la figure 18 est une vue identique de la figure 17 lors du retour du doigt vers la position fermée, le dispositif de blocage étant automatiquement déverrouillé par une rampe du corps avant la fin de course de fermeture.

### Description de deux modes préférentiels de l'invention

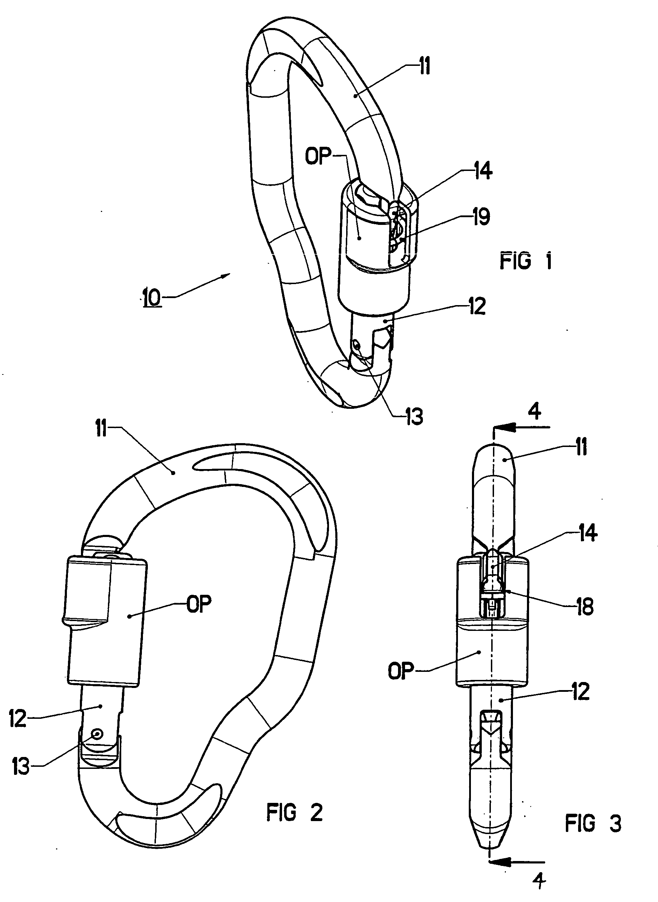

Sur les figures 1 à 10, un mousqueton 10 pour l'escalade et l'alpinisme comporte un corps 11 métallique en forme de C, et un doigt 12 mobile monté à pivotement autour d'un axe 13 situé à l'extrémité inférieure du corps 11. La première extrémité supérieure du corps 11 est pourvue d'un élément de retenue mâle 14 apte à s'engager dans un élément d'accrochage femelle 15 du doigt 12 lors de son retour vers la position de fermeture sous l'action d'un premier ressort de rappel 16. L'élément de retenue mâle 14 présente à titre d'exemple une structure de T renversé comportant une languette prolongée par une protubérance en forme de chape. Une rampe 17 est agencée au bout de la première extrémité supérieure de l'élément de retenue mâle 14. L'élément d'accrochage femelle 15 du doigt 12 est situé à l'opposé de l'axe 13 de pivotement, et comprend un évidement de forme conjuguée à l'élément mâle 14.

Le mousqueton 10 est équipé d'un dispositif de blocage 18 pour le verrouillage automatique du doigt 12 en position de fermeture. Il comporte une pièce de verrouillage 19 montée à pivotement limité au voisinage de l'élément d'accrochage 15 avec une liaison élastique sollicitant ladite pièce vers une position verrouillée lorsque le doigt 12 se trouve en position de fermeture.

Selon l'invention, la pièce de verrouillage 19 est réalisée au moyen d'un fil d'acier plié en forme de U, lequel comporte aux extrémités deux demi-axes 20, 21 décalés et engagés diamétralement dans un bossage du doigt 12 mobile pour constituer la liaison à pivotement élastique. L'axe de pivotement de la pièce de verrouillage 19 s'étend perpendiculairement au doigt 12 mobile.

En position fermée verrouillée (figures 1 à 4), la pièce de verrouillage 19 se trouve en regard de la protubérance de l'élément mâle 14, ce qui empêche tout pivotement du doigt 12 vers l'intérieur lors d'une action de poussée s'exerçant perpendiculairement par rapport à la direction longitudinale du doigt 12. Un léger jeu sépare le doigt 12 de la partie intermédiaire repliée du fil, de manière à autoriser le mouvement de pivotement sans frottement de la pièce de verrouillage 19 entre la position verrouillée et la position déverrouillée, et vice versa.

La pièce de verrouillage 19 est équipée avantageusement 22 d'un organe de préhension OP pour faciliter le mouvement de pivotement du doigt vers la position déverrouillée. L'organe de préhension OP peut être à titre d'exemple par une bague d'actionnement 23 montée coaxialement à coulissement sur le doigt 12 avec interposition d'un deuxième ressort 24 de rappel sollicitant la bague 23 vers la position verrouillée lorsque le doigt 12 est fermé. Le deuxième ressort 24 de rappel est formé par un ressort de compression prenant appui contre une butée 25 fixe encastrée dans le doigt 12.

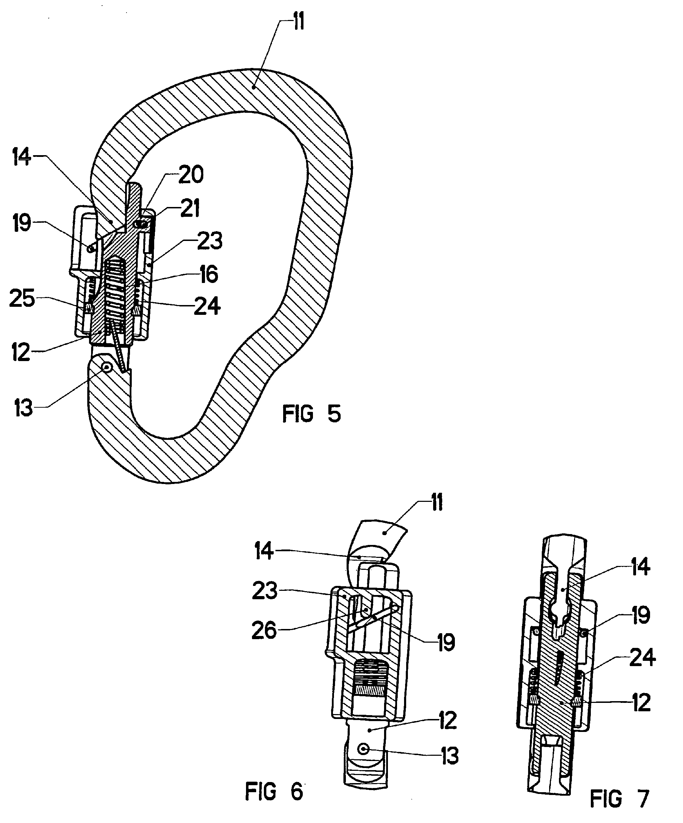

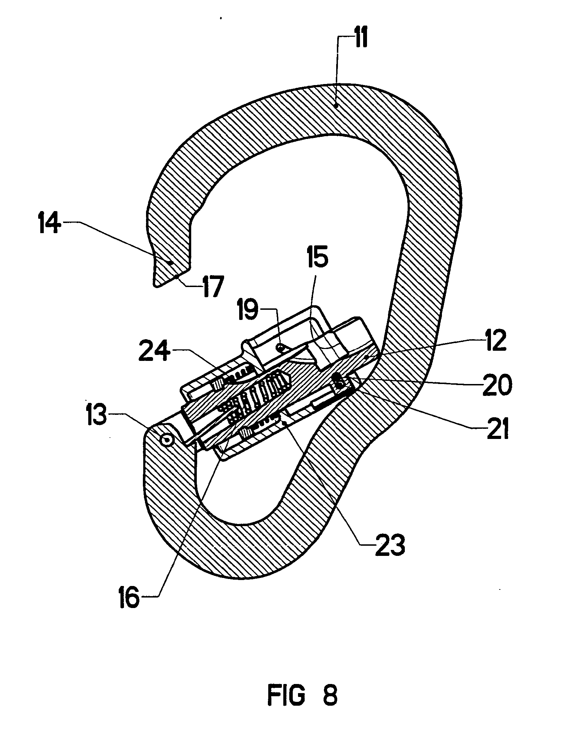

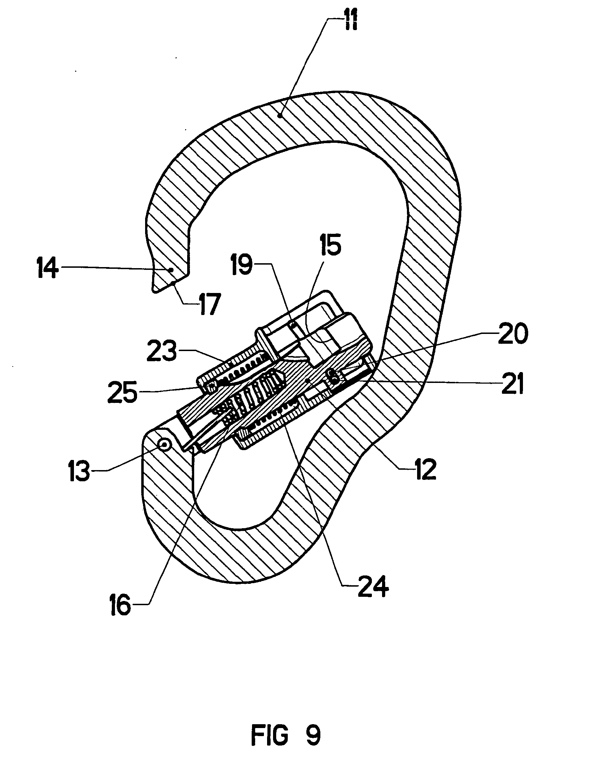

Pour assurer l'ouverture du doigt 12, il suffit de tirer la bague d'actionnement 23 vers le bas pour faire pivoter manuellement la pièce de verrouillage 19 dans le même sens en direction de la position déverrouillée (figures 6 et 7) par poussée d'un ergot 26. Le fil libère la protubérance de l'élément mâle 14 autorisant l'ouverture du doigt 12 par une action de poussée faisant pivoter le doigt 12 autour de l'axe 13 vers la position d'ouverture de la figure 8. Dans cette position, la pièce de verrouillage 19 revient élastiquement vers la position verrouillée dès qu'on relâche l'action manuelle de déverrouillage (figure 9).

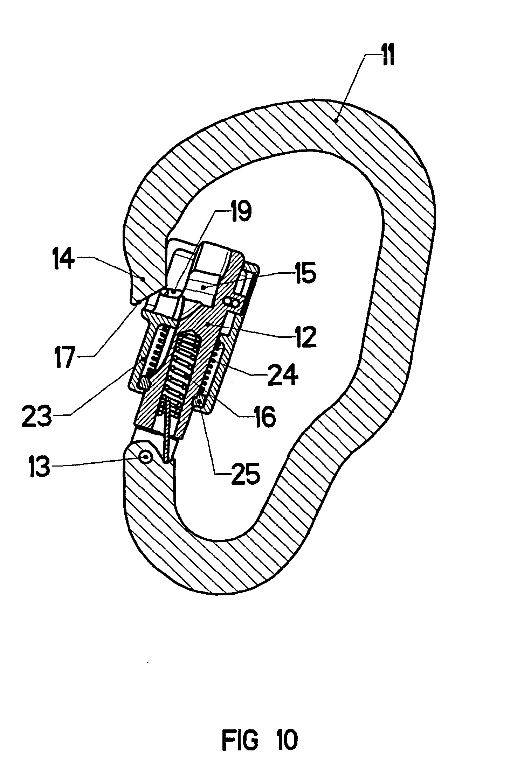

La refermeture du doigt 12 mobile intervient automatiquement suite à la détente du premier ressort de rappel 16 après relâchement du doigt 12. La rampe 17 fait pivoter automatiquement la pièce de verrouillage 19 vers le bas avant la venue du doigt 12 en fin de course de fermeture (voir figure 10).

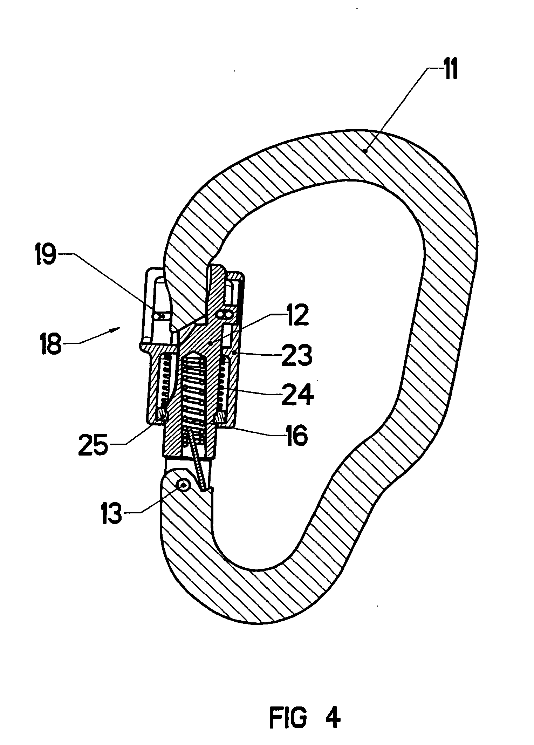

En position de fermeture (figures 3 et 4), la pièce de verrouillage 19 remonte en regard de la protubérance de l'élément mâle 14 pour verrouiller le mousqueton 10 en position de fermeture.

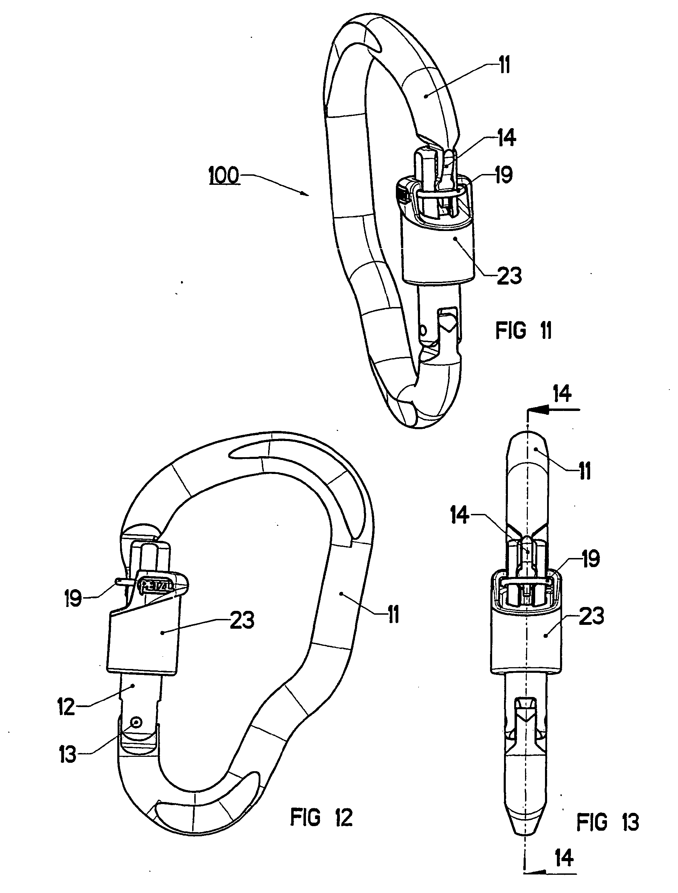

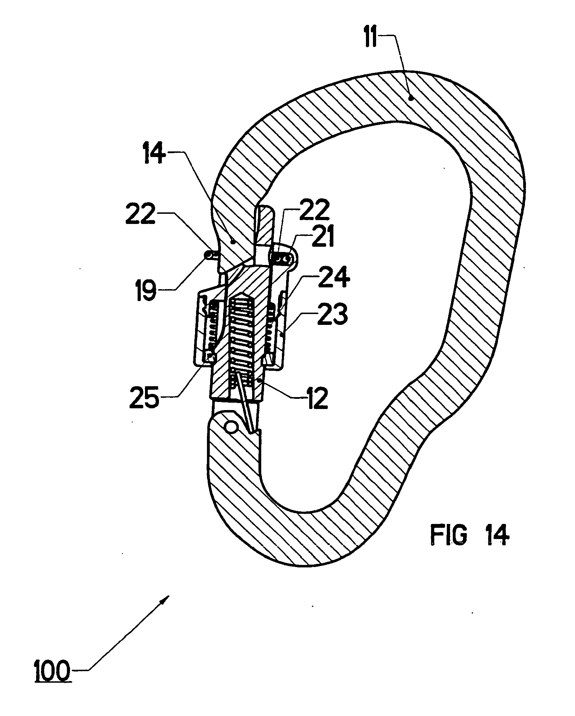

Selon la variante de réalisation du mousqueton 100 illustré aux figures 11 à 18, on utilisera les mêmes numéros de références pour désigner des pièces identiques ou similaires.

La pièce de verrouillage 19, au lieu d'être fixée sur le doigt 12, est dans ce cas solidaire de la bague d'actionnement 23 entourant coaxialement le doigt 12 .

Le fonctionnement du mousqueton 100 selon les figures 11 à 18 est le suivant:

Dans la position fermée verrouillée du doigt 12 (figures 11 à 14), la bague d'actionnement 23 est en position relevée, et la pièce de verrouillage 19 se trouve en regard de la protubérance de l'élément mâle 14 avec interposition du jeu 22. Elle empêche tout mouvement de pivotement du doigt 12 vers l'intérieur du corps 11. Cette position fermée verrouillée est stable.

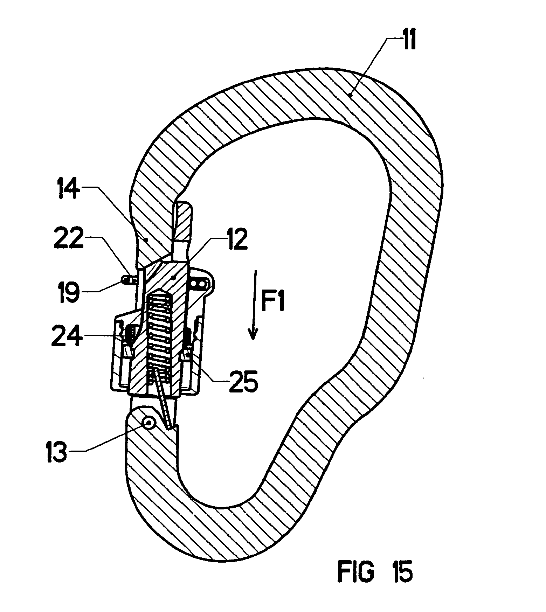

La figure 15 illustre la position fermée déverrouillée du doigt 12 suite au déplacement en translation (flèche F1) de la bague d'actionnement 23 vers la position déverrouillée. Cette translation vers le bas de la bague 23 s'effectue à l'encontre du deuxième ressort 24 de rappel, et provoque l'échappement de la pièce de verrouillage 19.

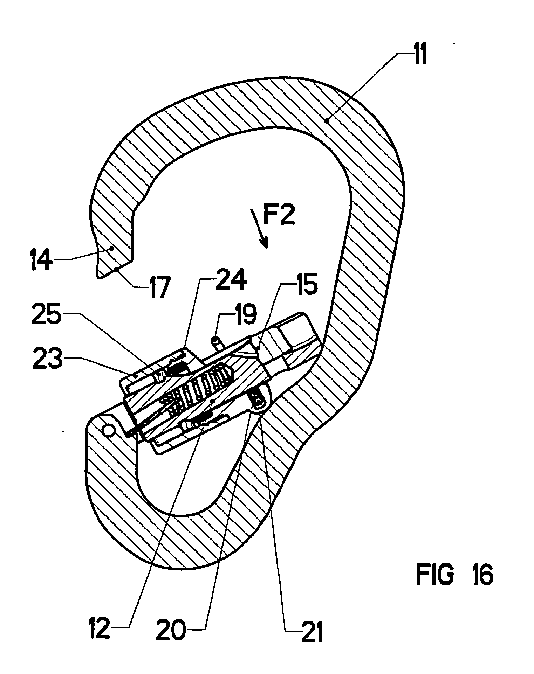

Il est maintenant possible de faire pivoter le doigt 12 (flèche F2) vers la position d'ouverture (figure 16).

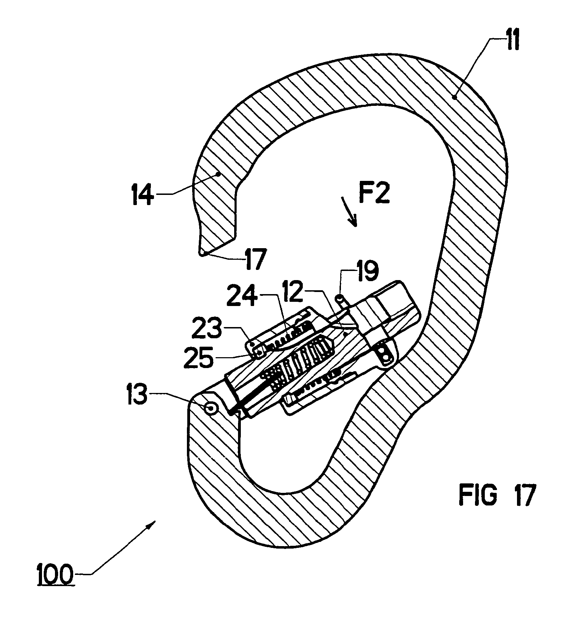

La pièce de verrouillage 19 se déplace ensuite en translation avec la bague 23 vers la position de verrouillage sous l'action de la détente du deuxième ressort 24 (figure 17).

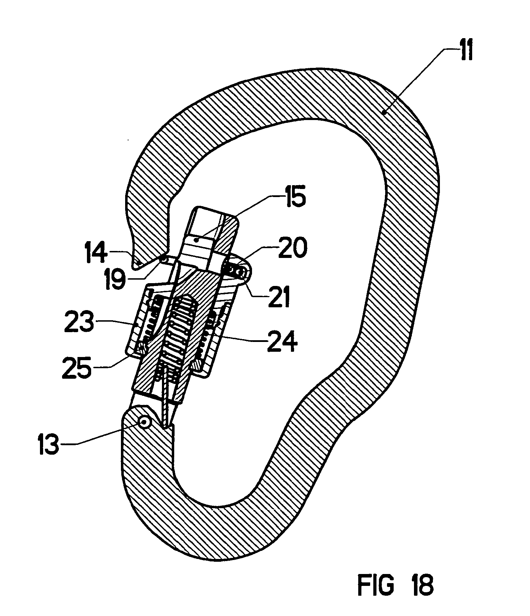

Après le relâchement de l'effort d'ouverture, le premier ressort de rappel 16 ramène automatiquement le doigt 12 mobile vers la position fermée (figure 18). Pour autoriser la fermeture, la rampe 17 fait pivoter automatiquement la pièce de verrouillage 19 vers le bas avant la venue du doigt 12 en fin de course de fermeture.

## Revendications

1. Mousqueton (10, 100), notamment pour l'escalade et l'alpinisme, comprenant :
- un corps (11) fixe en forme de C ayant une première extrémité dotée d'un élément de retenue (14),
- un doigt (12) mobile autour d'un axe (13) entre une position de fermeture et une position d'ouverture, ledit axe étant situé au voisinage de la deuxième extrémité du corps (11),
- un premier ressort (16) de rappel sollicitant le doigt (12) vers la position de fermeture par engagement de l'élément de retenue (14) dans un élément d'accrochage (15) du doigt (12),
- un dispositif de blocage (18) comprenant une pièce de verrouillage (19) mobile sollicitée par des moyens élastiques vers une position verrouillée pour le verrouillage automatique du doigt (12) en position de fermeture, ladite pièce de verrouillage (19) étant montée à pivotement limité au voisinage de l'élément d'accrochage (15), en étant associée à une bague d'actionnement (23) utilisée uniquement à l'ouverture du mousqueton pour le pivotement du doigt (12) vers la position déverrouillée,
- et des moyens agencés à la première extrémité du corps (11) fixe pour déverrouiller automatiquement la pièce de verrouillage (19) avant la venue du doigt (12) en fin de course de fermeture,
**caractérisé en ce que** la pièce de verrouillage (19) est réalisée au moyen d'un fil d'acier plié en forme de U, et comportant aux extrémités deux demi-axes (20, 21) décalés pour constituer les moyens élastiques de rappel de la pièce de verrouillage (19) dans le sens du verrouillage.

2. Mousqueton selon la revendication 1, **caractérisé en ce que** la pièce de verrouillage (19) est solidaire du doigt mobile (12).

3. Mousqueton selon la revendication 1, **caractérisé en ce que** la pièce de verrouillage (19) est solidaire de la bague d'actionnement (23).

4. Mousqueton selon la revendication 1, **caractérisé en ce que** l'axe (13) de pivotement de la pièce de verrouillage (19) s'étend perpendiculairement au doigt (12) mobile.

5. Mousqueton selon la revendication 2 ou 3, **caractérisé en ce que** la bague de préhension (23) est montée coaxialement à coulissement sur le doigt (12) avec interposition d'un deuxième ressort (24) de rappel sollicitant la pièce de verrouillage (19) et la bague d'actionnement (23) vers la position verrouillée du doigt (12).

6. Mousqueton selon la revendication 5, **caractérisé en ce que** le deuxième ressort (24) de rappel est formé par un ressort de compression prenant appui contre une butée (25) fixe du doigt (12).

## Claims

1. Carabiner (10, 100), in particular for climbing and mountaineering, comprising:
- a fixed C-shaped body (11) having a first end provided with a securing part (14),
- a gate (12) movable around a spindle (13) between a closed position and an open position, said spindle being situated close to the second end of the body (11),
- a first return spring (16) biasing the gate (12) to the closed position by engagement of the securing part (14) in a latching part (15) of the gate (12),
- a blocking device (18) comprising a movable locking part (19) biased by flexible means to a locked position for automatic locking of the gate (12) in the closed position, said locking part (19) being mounted with limited pivoting near to the latching part (15), being associated with an actuating ring (23) used only for opening of the carabiner for pivoting of the gate (12) to the unlocked position,
- and means located at the first end of the fixed body (11) for automatically unlocking the locking part (19) before the gate (12) reaches the end of closing travel,
**characterized in that** the locking part (19) is achieved by means of a steel wire folded into a U-shape, and comprises two offset half-spindles (20, 21) at the ends thereof to form the flexible return means of the locking part (19) in the locking direction.

2. Carabiner according to claim 1, **characterized in that** the locking part (19) is integral to the movable gate (12).

3. Carabiner according to claim 1, **characterized in that** the locking part (19) is integral to the actuating ring (23).

4. Carabiner according to claim 1, **characterized in that** the pivoting spindle (13) of the locking part (19) extends perpendicularly to the movable gate (12).

5. Carabiner according to claim 2 or 3, **characterized in that** the gripping ring (23) is mounted coaxially sliding on the gate (12) with an interposed second return spring (24) biasing the locking part (19) and the actuating ring (23) to the locked position of the gate (12).

6. Carabiner according to claim 5, **characterized in that** the second return spring (24) is formed by a compression spring pressing against a fixed stop (25) of the gate (12).

## Patentansprüche

1. Karabiner (10, 100), insbesondere zum Klettern und Bergsteigen, der umfasst:
- einen festen, C-förmigen Körper (11), der ein erstes Ende hat, das mit einem Rückhalteelement (14) versehen ist,
- einen Finger (12), der um eine Achse (13) herum zwischen einer Verschluss- und einer Öffnungsposition beweglich ist, wobei die Achse nahe dem zweiten Ende des Körpers (11) gelegen ist,
- wobei eine erste Rückholfeder (16) den Finger (12) in Richtung auf die Verschlussposition zieht, durch Eingriff des Rückhalteelements (14) in ein Befestigungselement (15) des Fingers (12),
- eine Blockierungsvorrichtung (18), die ein bewegliches Verriegelungselement (19) umfasst, das durch elastische Mittel in eine verriegelte Position gezogen wird, zur automatischen Verriegelung des Fingers (12) in der Verschlussposition, wobei das Verriegelungselement (19) begrenzt schwenkbar nahe dem Eingriffselement (15) montiert ist und mit einem Betätigungsring (23) zusammenhängt, der nur zum Öffnen des Karabiners zum Schwenken des Fingers (12) in Richtung auf die entriegelte Position verwendet wird,
- sowie Mittel, die am ersten Ende des festen Körpers (11) angeordnet sind, um das Verriegelungselement (19) automatisch zu entriegeln, bevor der Finger (12) in seine endgültige Verschlussstellung gelangt,
**dadurch gekennzeichnet, dass** das Verriegelungselement (19) aus einem U-förmig gebogenen Stahldraht gefertigt ist und an beiden Enden zwei Halbachsen (20, 21) umfasst, die versetzt angeordnet sind, um elastische Rückholmittel für das Verriegelungselement (19) in Verriegelungsrichtung zu bilden.

2. Karabiner nach Anspruch 1, **dadurch gekennzeichnet, dass** das Verriegelungselement (19) fest verbunden ist mit dem beweglichen Finger (12).

3. Karabiner nach Anspruch 1, **dadurch gekennzeichnet, dass** das Verriegelungselement (19) fest verbunden ist mit dem Betätigungsring (23).

4. Karabiner nach Anspruch 1, **dadurch gekennzeichnet, dass** sich die Schwenkachse (13) des Verriegelungselements (19) lotrecht zum beweglichen Finger (12) erstreckt.

5. Karabiner nach Anspruch 2 oder 3, **dadurch gekennzeichnet, dass** der Greifring (23) koaxial gleitend auf den Finger (12) montiert ist, wobei eine zweite Rückholfeder (24) dazwischen angeordnet ist, die das Verriegelungselement (19) und den Betätigungsring (23) in die verriegelte Position des Fingers (12) zieht.

6. Karabiner nach Anspruch 5, **dadurch gekennzeichnet, dass** die zweite Rückholfeder (24) von einer Kompressionsfeder gebildet wird, die an einem festen Anschlag (25) des Fingers anliegt.
